# EUROPÄISCHE PATENTSCHRIFT

(11) **EP 0 813 945 B1**
(45) Veröffentlichungstag und Bekanntmachung des Hinweises auf die Patenterteilung: **09.04.2003**
(21) Anmeldenummer: 97810360.4
(22) Anmeldetag: 10.06.1997
(51) Int. Cl.: B29C 43/00, B29C 67/24, C08G 59/68, C08L 63/00, H01B 3/40

(54) **Herstellung von Formkörpern aus einer Einkomponenten-Expoxidharzmischung mit Hilfe der automatischen Druckgeliertechnik**
Fabrication of mouled bodies from a one-coponent epoxy resin composition by means of an automatic pressure gelling process
Fabrication de corps moulés à base d'une résine époxyde à un composant utilisant un procédé de gélification sous pression automatique

(30) Priorität: 17.06.1996 CH 151096
(43) Veröffentlichungstag der Anmeldung: 29.12.1997
(73) Patentinhaber: Vantico AG, 4057 Basel (CH)
(72) Erfinder: Behm, Dean Tallak, Newark, DE 19711 (US); Mayer, Carl Walter, 4125 Riehen (CH); Moser, Roland, 4125 Riehen (CH)
(74) Vertreter: Dannappel, Hans-Jochen, Dr.

(56) Entgegenhaltungen:
- EP-A- 0 066 543
- EP-A- 0 599 600
- EP-A- 0 673 104
- W. FERNG ET AL.: PROCEEDINGS: ELECTRICAL ELECTRONICS INSULATION CONFERENCE AND ELECTRICAL MANUFACTURING & COIL WINDING CONFERENCE, 1995, Seiten 329-334, XP002045943

## Beschreibung

Die vorliegende Erfindung betrifft ein Verfahren zur Herstellung eines Formkörpers mit Hilfe der automatischen Druckgeliertechnik unter Verwendung einer härtbaren Einkomponentenepoxidharzzusammensetzung.

Bei der Herstellung von Formkörpern mit Hilfe der automatischen Druckgeliertechnik, die seit längerem bekannt ist, wird die härtbare Epoxidharzzusammensetzung zunächst, falls erforderlich, durch Erwärmung verflüssigt und dann in eine Form eingebracht, die eine Temperatur aufweist, die hoch genug ist, um eine thermische Härtung der Zusammensetzung einzuleiten. In dieser Form verbleibt die Zusammensetzung, bis der Formkörper so ausreichend gehärtet und verfestigt ist, dass er entformt werden kann, wobei während der Härtung des Formkörpers ständig unter Druck soviel der härtbaren Zusammensetzung in die Form nachgeführt wird, dass die Volumenabnahme des Formkörpers während der Härtung ausgeglichen wird.

Häufig werden für das geschilderte Verfahren als härtbares Material Zusammensetzungen eingesetzt, die neben dem Epoxidharz einen Anhydridhärter und gegebenenfalls einen Härtungsbeschleuniger enthalten. Diese Zusammensetzungen werden in der Praxis nur als Mehrkomponentensysteme eingesetzt, da das Harz auf der einen Seite und Härter sowie Beschleuniger auf der anderen Seite schon nach relativ kurzem Kontakt merklich miteinander zu reagieren beginnen, so dass derartige Zusammensetzungen in Form von Einkomponentensystemen schlecht lagerfähig wären. Die Mischung der Komponenten dieser herkömmlichen Zusammensetzungen muss daher beim Anwender erfolgen und zudem in sehr sorgfältiger Weise, wenn man in reproduzierbarer Weise Formkörper mit guten und gleichbleibenden Eigenschaften erhalten will. Es besteht daher ein Bedarf an lagerfähigen Einkomponentenmischungen für das automatische Druckgelierverfahren, die es dem Anwender ermöglichen, den mit der Mischung der Komponenten verbundenen Aufwand zu vermeiden.

Es wurde nunmehr gefunden, dass sich bestimmte in der EP-A-0 673 104 speziell für die Fixierung von Drahtwicklungen elektrischer Spulen mit Hilfe des sogenannten Träufel- oder Heisstauchrollierverfahrens vorgeschlagene Einkomponentenzusammensetzungen, die als wesentliche Bestandteile mindestens ein Epoxidharz mit mehr als einer Epoxidgruppe pro Molekül sowie ein aus N-Benzylchinoliniumhexafluoroantimonat und 1,1,2,2-Tetraphenyl-1,2-ethandiol bestehendes Initiatorensystem für die kationische Polymerisation des Epoxidharzes enthalten, ausgezeichnet für die Herstellung von Formkörpern mit Hilfe der automatischen Druckgeliertechnik eignen. Dies ist deshalb so überraschend, weil die Polymerisation von Epoxidharzen mit kationischen Initiatoren, wie N-Benzylchinoliniumhexafluoroantimonat, im allgemeinen sehr stark exotherm ist, es aber dennoch bei Verwendung der genannten speziellen Epoxidharzzusammensetzungen und gleichzeitiger Einhaltung einiger spezieller kritischer Verfahrensparameter, weder zu einer unerwünschten vorzeitigen Härtung des Materials beim Einbringen in die Form kommt noch die im Verlauf der Härtung freiwerdende Reaktionswärme so gross wird, dass aufgrund einer zu schnell ansteigenden und insgesamt zu hohen Innentemperatur im aushärtenden Material des Formkörpers innere Risse oder Sprünge auftreten, die besonders die mechanische Festigkeit grosser Formkörper negativ beeinflussen würden. Als kritische Verfahrensparameter sind insbesondere die Initiatorkonzentration der Epoxidharzzusammensetzung, die Temperatur, mit der die Zusammensetzung in die Form eingebracht wird, sowie der Temperatur der Form selbst zu nennen.

Gegenstand der Erfindung ist deshalb ein Verfahren zur Herstellung eines Formkörpers mit Hilfe der automatischen Druckgeliertechnik, bei dem eine flüssige härtbare Epoxidharzzusammensetzung in eine Form eingebracht wird, die eine Temperatur aufweist, die hoch genug ist, um eine thermische Härtung der Zusammensetzung einzuleiten, und die Zusammensetzung unter Härtung so lange in dieser Form verbleibt, bis der Formkörper so weit verfestigt ist, dass er entformt werden kann, wobei während der Härtung des Formkörpers ständig unter Druck so viel der härtbaren Zusammensetzung in die Form nachgeführt wird, dass die Schrumpfung der härtenden Zusammensetzung ausgeglichen wird, und das dadurch gekennzeichnet ist, dass
- es sich bei der härtbaren Epoxidharzzusammensetzung um eine Einkomponentenzusammensetzung handelt,
- die härtbare Epoxidharzzusammensetzung mindestens ein Epoxidharz mit mehr als einer Epoxidgruppe pro Molekül sowie N-Benzylchinoliniumhexafluoroantimonat in einer Menge von maximal 0,02 Mol pro Equivalent Epoxidgruppen in der Zusammensetzung und 1,1,2,2-Tetraphenyl-1,2-ethandiol (Benzopinakol) in einer Menge von maximal 0,02 Mol pro Equivalent Epoxidgruppen in der Zusammensetzung enthält;
- die härtbare Epoxidharzzusammensetzung mit einer Temperatur von 30 bis 55 °C in die Form eingebracht wird, und
- die Form eine Temperatur von 140 bis 150°C aufweist.

Als Epoxidharze können prinzipiell sämliche bekannten polyfunktionellen Epoxide eingesetzt werden, die man -gegebenenfalls unter Einsatz von Verdünnungsmitteln- bei Temperaturen verflüssigen kann, die unterhalb der Temperatur liegen, wo das Initiatorsystem bereits eine merkliche Härtung hervorruft. Diese Polyepoxide können aliphatische, cycloaliphatische oder aromatische Grundstrukturen enthalten.

Bevorzugt umfassen die im erfindungsgemässen Verfahren eingesetzten härtbaren Epoxidharzzusammensetzung jedoch ein Epoxidharz, das aus der Gruppe bestehend aus Polyglycidylethern und Polyglycidylestem ausgewählt ist.

Bei einer besonders günstigen Ausführungsform der Erfindung enthalten die härtbaren Epoxidharzzusammensetzungen ein Epoxidharz aus der Gruppe bestehend aus Diglycidylethern auf Basis von Bisphenol A und Diglycidylethern auf Basis von Bisphenol F oder eine Mischung derartiger Diglycidylether. Die vorgenannten Zusammensetzungen sind sehr reaktiv und härten besonders schnell aus.

Eine weitere besondere Ausführungsform des erfindungsgemässen Verfahrens ist dadurch gekennzeichnet, dass die härtbare Epoxidharzzusammensetzung ein Epoxidharz aus der Gruppe bestehend aus Polyglycidylestem aromatischer Polycarbonsäuren und Polyglycidylestem cycloaliphatischer Polycarbonsäuren oder ein Gemisch derartiger Polyglycidylester enthalten. Beispiele für geeignete Glycidylester umfassen die Glycidylester der Phthalsäure, Terephthalsäure, Isophthalsäure, Trimellitsäure und ganz oder teilweise hydrierter Derivate dieser Säuren, wie z. B. Tetra- und Hexahydrophthalsäure und -trimellitsäure.

Die härtbaren Epoxidharzzusammensetzungen, die im erfindungsgemässen Verfahren zum Einsatz kommen, enthalten das N-Benzylchinoliniumhexafluoroantimonat sowie das 1,1,2,2-Tetraphenyl-1,2-ethandiol (Benzopinakol) bevorzugt jeweils in einer Menge von 0,001 bis 0,02 Mol pro Equivalent Epoxidgruppen in der Zusammensetzung, insbesondere von 0,004 bis 0,008 Mol pro Equivalent Epoxidgruppen in der Zusammensetzung. N-Benzylchinoliniumhexafluoroantimonat und 1,1,2,2-Tetraphenyl-1,2-ethandiol liegen in den Zusammensetzungen zweckmässigerweise in einem Molverhältnis zueinander von 0,5 zu 1 bis 1 zu 0,5 vor, bevorzugt in einem Molverhältnis von etwa 1 zu 1.

Weiterhin können die für die vorliegende Erfindung geeigneten härtbaren Epoxidharzzusammensetzungen auch Füllstoffe enthalten. Je nach dem Zweck, der durch den Füllstoffeinsatz erreicht werden soll, kann eine breite Auswahl von Füllstoffen eingesetzt werden, z. B. Talkum, Kaolin, Glimmer, Gips, Titandioxid, Quarzmehl, Cellulose, Tonerde, gemahlener Dolomit, Glaspulver, Glaskugeln, Xonotlit, Wollastonit, Kieselerde mit grosser spezifischer Oberfläche (z. B. Areosil® ), Magnesiumoxid und -hydroxid, Aluminiumoxid oder Aluminiumoxidtrihydrat, Antimontrioxid oder Verstärkungsmittel, wie Glasfasern und sonstige Fasern, die auch zerkleinert, z. B. vermahlen sein können. Selbstverständlich sollten die Füllstoffe verträglich mit den übrigen Komponenten der Zusammensetzung sein und sollten bevorzugt den Polymerisationsinitiator bzw. die Polymerisation gar nicht oder zumindest nicht zu stark hemmen. Die Füllstoffe haben zweckmässigerweise eine Komgrösse von 10 bis 3000 µm, bevorzugt von 50 bis 1000 µm und können im allgemeinen auch in grosser Menge, z. B. in einer Menge von bis zu 80 Gew.-%, bezogen auf die Gesamtmenge der Epoxidzusammensetzung, verwendet werden. Grössere Mengen an Füllstoffen sind von Vorteil, da sie zu einer weniger exothermen Härtungsreaktion, geringerer Schrumpfung während der Härtung und zu einem härteren Formkörper mit guten mechanischen Eigenschaften führen. Sie führen aber unter Umständen zu einer unvorteilhaft hohen Viskosität der Epoxidharzzusammensetzungen. Bevorzugt beträgt die Viskosität der für das erfindungsgemässe Verfahren eingesetzten härtbaren Epoxidzusammensetzungen höchstens 25 Pa s bei 50 °C. Gute Ergebnisse enthält man z. B. bei Verwendung von 30 bis 75 Gew.-%, bevorzugt von 50 bis 75 Gew.-% Füllstoff, bezogen auf die Gesamtmenge der Epoxidzusammensetzung.

Die Epoxidharzzusammensetzungen für die vorliegende Erfindung können auch übliche Reaktiwerdünner für Epoxidharze enthalten, z. B. Epoxidharze, die bei Temperaturen von 15 bis 30 °C flüssig sind, beispielsweise in einer Menge von 1 bis 100 Gew.-%, bezogen auf das restliche Epoxidharz in der Zusammensetzung. Es kann sich bei den Reaktivverdünnern aber auch um Verbindungen mit anderen funktionellen Gruppen als Epoxidgruppen handeln, z. B. um Polyethylenglykole oder Polypropylenglykole. Solche Verbindungen werden bevorzugt in einer Menge von 1 bis 20 Gew.-%, bezogen auf das Epoxidharz in der Zusammensetzung, eingesetzt.

Weiterhin können die erfindungsgemässen Zusammensetzungen bei Bedarf Zähigkeitsvermittler (sogenannte "toughening agents") enthalten, insbesondere Core/Shell-Polymere. Geeignete Core/Shell-Polymere sind z. B. in der EP-A-0 578 613, der EP-A-0 449 776 oder dem US-Patent US-A-4,778,851 beschrieben. Sie werden bevorzugt in einer Menge von 1 bis 20 Gew.-%, bezogen auf die Gesamtmenge Epoxidharz in der Zusammensetzung, eingesetzt.

Schliesslich können die Epoxidharzzusammensetzungen auch andere bekannte und üblicherweise in der Technik polymerisierbarer Materialien eingesetzte Zusatzstoffe enthalten. Beispiele für solche Zusatzstoffe sind Pigmente, Farbstoffe, gepulvertes Polyvinylchlorid, Polyolefine, Metallpulver, wie Kupfer-, Silber-, Aluminium- oder Eisenpulver, Schaumhemmer, Antistatika, Verlaufsmittel, Haftvermittler für die Füllstoffe, wie Silan- oder Organotitanatverbindungen, Antioxydantien und Lichtschutzmittel. Diese Additive werden zweckmässig in üblichen Mengen eingesetzt, bevorzugt in Mengen bis zu 1,5 Gew.-%, bezogen auf das Harz.

Im allgemeinen ist bei Durchführung des erfindungsgemässen Verfahrens eine Verweildauer des zu härtenden Materials in der Form von 10 bis maximal etwa 20 Minuten ausreichend.

Die Art der Form ist unkritisch und es können erfindungsgemäss beliebige, für den APG-Prozess übliche Formen eingesetzt werden.

Zweckmässigerweise wird der Formkörper nach der Entformung einer thermischen Nachhärtung unterzogen, um für eine vollständige Aushärtung der Formkörper zu sorgen. Die Nachhärtung erfolgt bevorzugt während maximal 5 Stunden, insbesondere während 0,5 bis 2 Stunden, und bei einer Temperatur von 120 bis 200 °C, insbesondere bei einer Temperatur von 130 bis 150 °C.

Die Epoxidharzzusammensetzungen werden in üblicher Weise durch Vermischen ihrer Bestandteile und Homogenisieren, gegebenenfalls unter Erwärmung, hergestellt, ihre Temperatur wird auf 30 bis 55 °C eingestellt und sie werden in die Form gepumpt. Der Pumpdruck beträgt hierbei bevorzugt mindestens 20 kPa. Es ist im übrigen nicht erforderlich, die Form vor Befüllung mit der Einkomponentenzusammensetzung mit Inertgas zu spülen, obwohl Luftsauerstoff die Härtung von Epoxidharzen, insbesondere von Epoxidharzen auf Basis von Bisphenolen, initiiert durch Gemische aus Benzopinakol und N-Benzylchinoliniumhexafluoroantimonat, hemmt, wie aus Beschichtungsanwendungen derartiger Zusammensetzungen bekannt ist.

Das erfindungsgemässe Verfahren eignet sich zur Herstellung von Formkörpern aller Art, wird jedoch bevorzugt zur Herstellung von elektrischen Isolatoren verwendet.

### Beispiel 1:

Unter Rührung mit einem Vierflügelrührer werden bei einer Temperatur von 40 bis 50 °C zu 210,92 g einer Mischung von Bisphenol A- und Bisphenol F-Diglycidylether (Epoxidzahl der Mischung 5,5 - 5,8 eq/kg) 23,44 g Polypropylenglykol (Gewichtsmittel des Molekulargewichts Mw = 425) gegeben. Danach wird die Mischung auf 100 °C erwärmt und unter Vakuum entgast. Die Mischung wird unter Stickstoff auf 50 bis 60 °C abgekühlt und es werden unter Rühren 2,58 g Benzopinakol und 3,06 g N-Benzylchinoliniumhexafluoroantimonat zugegeben und aufgelöst. Bei 50 °C werden zu diesem Gemisch langsam 360,00 g Wollastonit zugegeben und das resultierende Gemisch unter Vakuum mit Hilfe eines Hochgeschwindigkeitsrühreres 5 Minuten lang gut homogenisiert.

Zur Messung elektrischer und mechanischer Eigenschaften an dem gehärteten Material werden mehrere Portionen einer entsprechend der obigen Vorschrift hergestellten entgasten Mischung in Formen der Abmessungen 200 mm x 200 mm x 4 mm sowie 135 mm x 135 mm x 2 mm gefüllt, die auf eine Temperatur von 120 °C vorgeheizt sind. Jede der Proben wird 1 Stunde lang bei einer Temperatur von 120 °C gehärtet und danach einer zweistündigen Nachhärtung bei 140°C unterzogen.

Es werden die in der nachfolgenden Tabelle 1 angegebenen Eigenschaften gefunden.

### Beispiel 2:

Unter Rührung mit einem Vierflügelrührer werden bei einer Temperatur von 40 bis 50 °C zu 213,27 g eines Bisphenol A-Diglycidylethers (Epoxidzahl 5,25 - 5,40 eq/kg) 21,09 g eines Diglycidylethers von Polypropylenglykol 400 (Epoxidzahl 3,05 - 3,35 eq/kg) gegeben. Danach wird die Mischung auf 100 °C erwärmt und unter Vakuum entgast. Die Mischung wird unter Stickstoff auf 50 bis 60 °C abgekühlt und es werden unter Rühren 2,58 g Benzopinakol und 3,06 g N-Benzylchinoliniumhexafluoroantimonat zugegeben und aufgelöst. Bei 50 °C werden zu diesem Gemisch langsam 360.00 g Wollastonit zugegeben und das resultierende Gemisch unter Vakuum mit Hilfe eines Hochgeschwindigkeitsrühreres 5 Minuten lang gut homogenisiert.

Eine Messung elektrischer und mechanischer Eigenschaften an dem gehärteten Material, wie unter Beispiel 1 angegeben, ergibt die ebenfalls in Tabelle 1 angegebenen Werte.

**Tabelle 1**

| Beispiel | 1 | 2 |
|---|---|---|
| Viskosität bei 40 °C [mPa s] | 23300 | 30014 |
| Gelzeit bei 140 °C [Minuten] | 8,43 | 6,93 |
| Reaktionsenthalpie [J/g] | 65 | 64 |
| Biegefestigkeit gemäss ISO 178 [MPa] | 125 | 112 |
| Elastizitätsmoaul gemäss ISO 178 [MPa] | 11512 | 11301 |
| Bruchdehnung (Biegeversuch ISO 178) [%] | 1,3 | 1,1 |
| Zugfestigkeit gemäss ISO R 527 [MPa] | 62 | 73 |
| Zugmodul gemäss ISO R 527 [MPa] | 10079 | 10592 |
| Bruchdehnung (Zugversuch ISO R 527) [%] | 1,0 | 0,9 |
| K_{1C} [MPa m^{1/2}] gemäss CG 216-0/89 ¹⁾ | 2,52 | 2,04 |
| G_{1C} [J/m²] gemäss CG 216-0/89 ¹⁾ | 504 | 336 |
| Verlustfaktor bei 25 °C gemäss IEC 250 [%] | 0,8 | 0,9 |
| Dielektrizitätskonstante bei 25 °C (IEC 250) | 4,8 | 4,8 |
| ¹⁾ CG-216-0/89 ist eine Vorschrift der Ciba-Geigy AG für den Double Torsion Test | | |

### Beispiel 3:

Unter Rührung mit einem Vierflügelrührer werden bei einer Temperatur von 40 bis 50°C zu 5624,64 g einer Mischung von Bisphenol A- und Bisphenol F-Diglycidylether (Epoxidzahl der Mischung 5,5 - 5,8 eq/kg) 624,96 g Polypropylenglykol (Gewichtsmittel des Molekulargewichts Mw = 425) gegeben. Danach wird die Mischung auf 100 °C erwärmt und unter Vakuum entgast. Die Mischung wird unter Stickstoff auf 50 bis 60 °C abgekühlt und es werden unter Rühren 68,80 g Benzopinakol und 81,60 g N-Benzylchinoliniumhexafluoroantimonat zugegeben und aufgelöst. Bei 55 °C werden zu diesem Gemisch langsam 9600,00 g Wollastonit zugegeben und das resultierende Gemisch unter Vakuum 220 Minuten lang gut homogenisiert. Die Zusammensetzung dieses Gemisches entspricht der des Gemisches von Beispiel 1.

Mit Hilfe der automatischen Druckgeliertechnik werden unter Verwendung der erhaltenen Mischung fünf Elektroisolatoren (Siemens Type A) mit einem Durchmesser von 7,5 cm und einer Länge von 21 cm hergestellt. Die Form (Form-Typ: Siemens-Stützer, Schliesseinheit: Gr. Suter) hat hierbei eine Temperatur von 140 bis 145 °C und wird innerhalb von 2 Minuten bei einem Druck von 300 kPa (3 bar) gefüllt. Nach insgesamt 15 Minuten wird die Form geöffnet und der Formling entnommen. Die durchschnittliche Gelzeit der 5 Ansätze beträgt einschliesslich der Füllzeit 280 Sekunden. Der Isolator wird schliesslich ohne die Form während 2 Stunden bei 140 °C nachgehärtet. Mit zwei gedrehten Messingeinsätzen an jedem Ende hat der Isolator ein Gesamtgewicht von ca. 1150 g.

Die Isolatoren weisen eine Umbruchfestigkeit (cantilever strength) nach DIN 48136/68 von 5096 N bei 23 °C auf. Wie eine Röntgenuntersuchung ergibt, zeigen alle Isolatoren keinerlei innere Sprünge, Risse oder sonstige Fehler.

### Beispiel 4:

Unter Rührung mit einem Vierflügelrührer werden bei einer Temperatur von 40 bis 50 °C zu 5687,14 g eines Bisphenol A-Diglycidylethers (Epoxidzahl 5,25 - 5,40 eq/kg) 562,46 g eines Diglycidylethers von Polypropylenglykol 400 (Epoxidzahl 3,05 - 3,35 eq/kg) gegeben. Danach wird die Mischung auf 100 °C erwärmt und unter Vakuum entgast. Die Mischung wird unter Stickstoff auf 50 bis 60 °C abgekühlt und es werden unter Rühren 68,80 g Benzopinakol und 81,60 g N-Benzylchinoliniumhexafluoroantimonat zugegeben und aufgelöst. Bei 55 °C werden zu diesem Gemisch langsam 9600,00 g Wollastonit zugegeben und das resultierende Gemisch unter Vakuum 220 Minuten lang gut homogenisiert. Die Zusammensetzung dieses Gemisches entspricht der des Gemisches von Beispiel 2.

Mit Hilfe der automatischen Druckgeliertechnik werden unter Verwendung der erhaltenen Mischung fünf Elektroisolatoren (Siemens Type A) mit einem Durchmesser von 7,5 cm und einer Länge von 21 cm hergestellt. Die Form (Form-Typ: Siemens-Stützer, Schliesseinheit: Gr. Suter) hat hierbei eine Temperatur von 140 bis 145 °C und wird innerhalb von 2 Minuten bei einem Druck von 300 kPa (3 bar) gefüllt. Nach insgesamt 14 Minuten wird die Form geöffnet und der Formling entnommen. Die durchschnittliche Gelzeit der 5 Ansätze beträgt einschliesslich der Füllzeit 243 Sekunden. Der Isolator wird schliesslich ohne die Form während 2 Stunden bei 140 °C nachgehärtet. Mit zwei gedrehten Messingeinsätzen an jedem Ende hat der Isolator ein Gesamtgewicht von ca. 1150 g.

Die Isolatoren weisen eine Umbruchfestigkeit (cantilever strength) nach DIN 48136/68 von 4765 N bei 23 °C auf. Wie eine Röntgenuntersuchung ergibt, zeigen alle Isolatoren keinerlei innere Sprünge, Risse oder sonstige Fehler.

### Beispiel 5:

In einem Sulfierkolben (mehrhälsiger Standkolben), der mit Rührer, Thermometer und Inertgasspülung (N₂) versehen ist, werden 97,62 g flüssiger Hexahydrophthalsäurediglycidylester (Araldit®PY 284, Epoxidzahl 6,4 - 6,9 eq/kg) und 1,06 g 1,1,2,2-Tetraphenylethandiol (Benzopinakol) vorgelegt und unter gutem Rühren auf 75 °C erwärmt. Nach ca. 20 Minuten Rühreinwirkung liegt eine klare gelbstichige Lösung vor, die nun auf eine Temperatur von 40 °C abgekühlt wird. Unter weiterem Rühren werden 1,32 g N-Benzylchinoliniumhexafluoroantimonat zugegeben. Nach 30-minütigem Rühren liegt eine klare gelbe Lösung vor. In diese Lösung werden bei Vakuum unter Rühren 185,7 g Quarzmehl des Typs W 12 EST (Produktbezeichnung der Quarzwerke Frechen) gegeben. Danach wird das Gemisch in eine auf 100 °C erhitzte Metallform vergossen, zunächst 5 Stunden bei dieser Temperatur gehärtet und dann 3 Stunden bei 160 °C nachgehärtet. Das härtbare Gemisch und der ausgehärtete Formkörper, der zunächst in Normkörper zerteilt wird, weisen die in Tabelle 2 angegebenen Eigenschaften auf.

### Beispiel 6 (zum Vergleich):

Zu 100 g flüssigem Hexahydrophthalsäurediglycidylester (Araldit®PY 284, Epoxidzahl 6,4 - 6,9 eq/kg) werden 90g Hexahydrophthalsäureanhydrid (Härter®HT 907) als Härtungsmittel sowie 0,5 g Reaktionsbeschleuniger Beschleuniger®DY 071) gegeben. Das Gemisch wird auf eine Temperatur von 70°C erwärmt, wobei eine klare Lösung erhalten wird, zu der man 353,8 g Quarzmehl, wiederum des Typs W 12 EST, gibt. Das härtbare Gemisch wird wie in Beispiel 5 beschrieben ausgehärtet und in Normkörper zerteilt. In Tabelle 2 sind die Eigenschaften gegenübergestellt.

**Tabelle 2**

| Beispiel | 5 | 6 |
|---|---|---|
| Viskosität ²⁾ bei 25 °C [Pa s] bei 60 °C [mPa s] | 36,6 3000 | 43,5 5300 |
| Gelzeit bei 120 °C [min] Gelzeit bei 140 °C [min] | 50 11,1 | 29 10 |
| DSC: Maximale Peak Temperatur [°C] Reaktionsenthalpie [J/g] | 175 205 | 183 116 |
| Biegefestigkeit bei 23 °C (ISO 178) [MPa] | 139 | 146 |
| Elastizitätsmodul (ISO 178) [MPa] | 12370 | 12190 |
| Randfaserdehnung (ISO 178) [%] | 1,2 | 1,3 |
| Schlagbiegefestigkeit (ISO 179) [kJ/m²] | 7 | 9 |
| Wärmeformbeständigkeit (ISO 75) [°C] | 124 | 113 |
| Tg-Wert (DSC) [°C] | 115 | 110 |
| ²⁾ Die Viskosität wurde mit einem Rheomat 115A MS DIN 125 bei 100 Umdrehungen pro Sekunde bestimmt. | | |

Man erkennt, dass die Eigenschaften eines Formkörpers, der mit Hilfe einer Einkomponentenzusammensetzung gemäss dem Verfahren der vorliegenden Erfindung hergestellt wurde, Eigenschaften ausweist, die denen vergleichbar sind, die Formkörper haben, die mit herkömmlichen Zweikomponentenzusammensetzungen hergestellt wurden.

### Beispiel 7:

Es wird ein weiteres Gemisch gemäss Beispiel 5, jedoch ohne Füllstoff, hergestellt. Die Viskosität und die Gelzeit dieses Gemisches werden sofort und nach jeweils ein-, drei- und sechsmonatiger Lagerung bei einer Temperatur von 25 °C gemessen. Es werden die in Tabelle 3 angegebenen Werte gefunden.

**Tabelle 3**

| | | |
|---|---|---|
| Viskosität ²⁾ bei 25 °C [mPa s] | nach 1 Monat nach 2 Monaten nach 6 Monaten | 320 330 340 340 |
| Gelzeit ⁴⁾ bei 160 °C [min] | nach 1 Monat nach 2 Monaten nach 6 Monaten | 1,33 1,33 1,33 1,33 |

| | | |
|---|---|---|
| ²⁾ Die Viskosität wurde mit einem Rheomat 115A MS DIN 125 bei 100 Umdrehungen pro Sekunde bestimmt. | | |
| ⁴⁾ b-plate, Dünnschicht (Ciba PM32/68) | | |

## Patentansprüche

1. Verfahren zur Herstellung eines Formkörpers mit Hilfe der automatischen Druckgeliertechnik, bei dem eine flüssige härtbare Epoxidharzzusammensetzung in eine Form eingebracht wird, die eine Temperatur aufweist, die hoch genug ist, um eine thermische Härtung der Zusammensetzung einzuleiten, und die Zusammensetzung unter Härtung so lange in dieser Form verbleibt, bis der Formkörper so weit verfestigt ist, dass er entformt werden kann, wobei während der Härtung des Formkörpers ständig unter Druck so viel der härtbaren Zusammensetzung in die Form nachgeführt wird, dass die Schrumpfung der härtenden Zusammensetzung ausgeglichen wird, **dadurch gekennzeichnet, dass**
- es sich bei der härtbaren Epoxidharzzusammensetzung um eine Einkomponentenzusammensetzung handelt,
- die härtbare Epoxidharzzusammensetzung mindestens ein Epoxidharz mit mehr als einer Epoxidgruppe pro Molekül sowie N-Benzylchinoliniumhexafluoroantimonat in einer Menge von maximal 0,02 Mol pro Equivalent Epoxidgruppen in der Zusammensetzung und 1,1,2,2-Tetraphenyl-1,2-ethandiol (Benzopinakol) in einer Menge von maximal 0,02 Mol pro Equivalent Epoxidgruppen in der Zusammensetzung enthält;
- die härtbare Epoxidharzzusammensetzung mit einer Temperatur von 30 bis 55 °C in die Form eingebracht wird, und
- die Form eine Temperatur von 140 bis 150°C aufweist.

2. Verfahren nach Anspruch 1, **dadurch gekennzeichnet, dass** die härtbare Epoxidharzzusammensetzung ein Epoxidharz umfasst, das aus der Gruppe bestehend aus Polyglycidylethern und Polyglycidylestern ausgewählt ist.

3. Verfahren nach Anspruch 2, **dadurch gekennzeichnet, dass** die härtbare Epoxidharzzusammensetzung ein Epoxidharz aus der Gruppe bestehend aus Diglycidylethern auf Basis von Bisphenol A und Diglycidylethem auf Basis von Bisphenol F oder eine Mischung derartiger Diglycidylether enthält.

4. Verfahren nach Anspruch 2 oder 3, **dadurch gekennzeichnet, dass** die härtbare Epoxidharzzusammensetzung ein Epoxidharz aus der Gruppe bestehend aus Polyglycidylestem aromatischer Polycarbonsäuren und Polyglycidylestern cycloaliphatischer Polycarbonsäuren oder ein Gemisch derartiger Polyglycidylester enthält.

5. Verfahren nach einem der Ansprüche 1 bis 4, **dadurch gekennzeichnet, dass** die härtbare Epoxidharzzusammensetzung das N-Benzylchinoliniumhexafluoroantimonat und das 1,1,2,2-Tetraphenyl-1,2-ethandiol (Benzopinakol) jeweils in einer Menge von 0,001 bis 0,02 Mol pro Equivalent Epoxidgruppen in der Zusammensetzung enthält.

6. Verfahren nach Anspruch 5, **dadurch gekennzeichnet, dass** die härtbare Epoxidharzzusammensetzung das N-Benzylchinoliniumhexafluoroantimonat und das 1,1,2,2-Tetraphenyl-1,2-ethandiol (Benzopinakol) jeweils in einer Menge von 0,004 bis 0,008 Mol pro Equivalent Epoxidgruppen in der Zusammensetzung enthält.

7. Verfahren nach einem der Ansprüche 1 bis 6, **dadurch gekennzeichnet, dass** die härtbare Epoxidharzzusammensetzung das N-Benzylchinoliniumhexafluoroantimonat und das 1,1,2,2-Tetraphenyl-1,2-ethandiol (Benzopinakol) in einem Molverhältnis zueinander von 0,5 zu 1 bis 1 zu 0,5 enthält, bevorzugt in einem Molverhältnis von etwa 1 zu 1.

8. Verfahren nach einem der Ansprüche 1 bis 7, **dadurch gekennzeichnet, dass** die härtbare Epoxidharzzusammensetzung zusätzlich Füllstoffe enthält.

9. Verfahren nach Anspruch 8, **dadurch gekennzeichnet, dass** die härtbare Epoxidharzzusammensetzung Füllstoffe in einer Menge von 50 bis 75 Gew.-% enthält, bezogen auf die Gesamtmenge der Epoxidzusammensetzung.

10. Verfahren nach einem der Ansprüche 1 bis 9, **dadurch gekennzeichnet, dass** die härtbare Epoxidharzzusammensetzung zusätzlich einen Reaktivverdünner und/oder einen Zähigkeitsvermittler (toughening agent) enthält.

11. Verfahren nach einem der Ansprüche 1 bis 10, **dadurch gekennzeichnet, dass** die Epoxidharzzusammensetzung 10 bis 20 Minuten in der Form verbleibt.

12. Verfahren nach einem der Ansprüche 1 bis 11, **dadurch gekennzeichnet, dass** der Formkörper nach der Entformung einer thermischen Nachhärtung unterzogen wird.

13. Verfahren nach Anspruch 12, **dadurch gekennzeichnet**, das die Nachhärtung bei einer Temperatur von 130 bis 150 °C erfolgt.

14. Verfahren nach einem der Ansprüche 12 oder 13, **dadurch gekennzeichnet, dass** die Nachhärtung während 0,5 bis 2 Stunden erfolgt.

15. Verfahren nach einem der Ansprüche 1 bis 14, **dadurch gekennzeichnet, dass** es sich bei dem Formkörper um einen elektrischen Isolationskörper handelt.

## Claims

1. A process for the preparation of a moulding by the automatic pressure gelation technique, which comprises introducing a liquid curable epoxy resin composition into a mould which has a temperature sufficiently high to initiate the heat curing of the composition, and wherein the composition remains in this mould to cure until the moulding has solidified enough to be demoulded, such an amount of the curable composition being continuously added under pressure to the mould while the moulding is being cured as to compensate for the shrinkage of the curing composition, and wherein
- the curable epoxy resin composition is a one-component composition,
- the curable epoxy resin composition comprises at least one epoxy resin having more than one epoxy group per molecule, N-benzylquinoliniumhexafluoroantimonate in an amount of at most 0.02 mol per equivalent of epoxy groups in the composition, and
1,1,2,2-tetraphenyl-1,2-ethanediol (benzopinacol) in an amount of at most 0.02 mol per equivalent of epoxy groups in the composition;
- the curable epoxy resin composition is introduced into the mould at a temperature of 30 to 55 °C, and
- the mould has a temperature of 140 to 150°C.

2. A process according to claim 1, wherein the curable epoxy resin composition comprises an epoxy resin selected from the group consisting of polyglycidyl ethers and polyglycidyl esters.

3. A process according to claim 2, wherein the curable epoxy resin composition comprises an epoxy resin selected from the group consisting of diglycidyl ethers based on bisphenol A and diglycidyl ethers based on bisphenol F, or a mixture of such diglycidyl ethers.

4. A process according to claim 2 or 3, wherein the curable epoxy resin composition comprises an epoxy resin selected from the group consisting of polyglycidyl esters of aromatic polycarboxylic acids and polyglycidyl esters of cycloaliphatic polycarboxylic acids, or a mixture of such polyglycidyl esters.

5. A process according to one of claims 1 to 4, wherein the curable epoxy resin composition comprises the N-benzylquinoliniumhexafluoroantimonate and the 1,1,2,2-tetraphenyl-1,2-ethanediol (benzopinacol) each in an amount of 0.001 to 0.02 mol per equivalent of epoxy groups in the composition.

6. A process according to claim 5, wherein the curable epoxy resin composition comprises the N-benzylquinoliniumhexafluoroantimonate and the 1,1,2,2-tetraphenyl-1,2-ethanediol (benzopinacol) each in an amount of 0.004 to 0.008 mol per equivalent of epoxy groups in the composition.

7. A process according to one of claims 1 to 6, wherein the curable epoxy resin composition comprises the N-benzylquinoliniumhexafluoroantimonate and the 1,1,2,2-tetraphenyl-1,2-ethanediol (benzopinacol) in a molar ratio of 0.5:1 to 1:0.5, preferably in a molar ratio of about 1:1.

8. A process according to one of claims 1 to 7, wherein the curable epoxy resin composition additionally comprises fillers.

9. A process according to claim 8, wherein the curable epoxy resin composition comprises fillers in an amount of 50 to 75 % by weight, based on the total amount of the epoxy composition.

10. A process according to one of claims 1 to 9, wherein the curable epoxy resin composition additionally comprises a reactive thinner and/or a toughening agent.

11. A process according to one of claims 1 to 10, wherein the epoxy resin composition remains in the mould for 10 to 20 minutes.

12. A process according to one of claims 1 to 11, which comprises subjecting the moulding after being demoulded to a heat postcure.

13. A process according to claim 12, wherein the postcure is carried out in the temperature range of 130 to 150 °C.

14. A process according to one of claims 12 or 13, wherein the postcure is carried out over 0.5 to 2 hours.

15. A process according to one of claims 1 to 14, wherein the moulded article is an electrical insulating body.

## Revendications

1. Procédé pour la fabrication d'un corps moulé à l'aide de la technique automatique de gélification sous pression, dans lequel on introduit une composition durcissable de résines époxydes dans un moule qui présente une température suffisamment élevée afin d'induire un durcissement thermique de la composition et la composition en durcissement demeure dans le moule jusqu'à ce que le corps moulé soit consolidé dans une mesure telle qu'il puisse être démoulé, en apportant pendant le durcissement du corps moulé sous pression permanente une quantité de composition durcissable telle que le retrait de la composition en durcissement soit compensé, **caractérisé en ce que**
- en ce qui concerne la composition durcissable de résines époxydes, il s'agit d'une composition à un composant,
- la composition durcissable de résines époxydes renferme au moins une résine époxyde présentant plus d'un groupe époxyde par molécule, ainsi que de l'hexafluoroantimoniate de N-benzyl-quinolinium dans une quantité d'au maximum 0,02 mole par équivalent de groupes époxydes dans la composition et du 1,1,2,2-tétraphényl-1,2-éthanediol (benzopinacol) dans une quantité d'au maximum 0,02 mole par équivalent de groupes époxydes dans la composition ;
- on introduit la composition durcissable de résines époxydes dans le moule à une température de 30 à 55°C, et
- le moule présente une température de 140 à 150°C.

2. Procédé selon la revendication 1, **caractérisé en ce que** la composition durcissable de résines époxydes renferme une résine époxyde prise dans le groupe comprenant des éthers polyglycidyliques et des esters polyglycidyliques.

3. Procédé selon la revendication 2, **caractérisé en ce que** la composition durcissable de résines époxydes renferme une résine époxyde prise dans le groupe comprenant des éthers diglycidyliques à base de bisphénol A et des éthers diglycidyliques à base de bisphénol F ou un mélange de tels éthers diglycidyliques.

4. Procédé selon la revendication 2 ou 3, **caractérisé en ce que** la composition durcissable de résines époxydes renferme une résine époxyde prise dans le groupe comprenant des esters polyglycidyliques d'acides polycarboxyliques aromatiques et des esters polyglycidyliques d'acides polycarboxyliques cycloaliphatiques ou un mélange de tels esters polyglycidyliques.

5. Procédé selon l'une des revendications 1 à 4, **caractérisé en ce que** la composition durcissable de résines époxydes renferme l'hexafluoroantimoniate de N-benzylquinolinium et le 1,1,2,2-tétraphényl-1,2-éthanediol (benzopinacol) chacun dans une quantité de 0,001 à 0,02 mole par équivalent de groupes époxydes dans la composition.

6. Procédé selon la revendication 5, **caractérisé en ce que** la composition durcissable de résines époxydes renferme l'hexafluoroantimoniate de N-benzylquinolinium et le 1,1,2,2-tétraphényl-1,2-éthanediol (benzopinacol) chacun dans une quantité de 0,004 à 0,008 mole par équivalent de groupes époxydes dans la composition.

7. Procédé selon l'une des revendications 1 à 6, **caractérisé en ce que** la composition durcissable de résines époxydes renferme l'hexafluoroantimoniate de N-benzylquinolinium et le 1,1,2,2-tétraphényl-1,2-éthanediol (benzopinacol) dans un rapport molaire de 0,5 à 1 à 1 à 0,5, de préférence dans un rapport molaire d'environ 1 à 1.

8. Procédé selon l'une des revendications 1 à 7, **caractérisé en ce que** la composition durcissable de résines époxydes renferme en plus des charges.

9. Procédé selon la revendication 8, **caractérisé en ce que** la composition durcissable de résines époxydes renferme des charges dans une quantité de 50 à 75 % en poids, par rapport à la quantité totale de la composition de résines époxydes.

10. Procédé selon l'une des revendications 1 à 9, **caractérisé en ce que** la composition durcissable de résines époxydes renferme en plus un diluant réactif et/ou un agent de ténacité (toughening agent).

11. Procédé selon l'une des revendications 1 à 10, **caractérisé en ce que** la composition durcissable de résines époxydes demeure dans le moule pendant une durée de 10 à 20 minutes.

12. Procédé selon l'une des revendications 1 à 11, **caractérisé en ce que** le corps moulé est soumis à un post-traitement thermique après démoulage.

13. Procédé selon la revendication 12, **caractérisé en ce que** le post-traitement thermique est mis en oeuvre à une température de 130 à 150°C.

14. Procédé selon l'une des revendications 12 ou 13, **caractérisé en ce que** le post-traitement thermique est mis en oeuvre pendant une durée de 0,5 à 2 heures.

15. Procédé selon l'une des revendications 1 à 14, **caractérisé en ce qu'**il s'agit pour le corps moulé d'un isolateur électrique.
